(19) Europäisches Patentamt
European Patent Office
Office européen des brevets

(11) **EP 1 749 048 B1**

(12) **FASCICULE DE BREVET EUROPEEN**

(45) Date de publication et mention
de la délivrance du brevet:
**27.01.2010 Bulletin 2010/04**

(51) Int Cl.:
***C08J 9/26*** $^{(2006.01)}$

(21) Numéro de dépôt: **05771143.4**

(86) Numéro de dépôt international:
**PCT/FR2005/001208**

(22) Date de dépôt: **13.05.2005**

(87) Numéro de publication internationale:
**WO 2005/116122 (08.12.2005 Gazette 2005/49)**

(54) **PROCEDE DE TRAITEMENT D'UN FILM D'ELECTRODE DE SUPERCAPACITE EN VUE DE CREER UNE PORORSITE ET MACHINE ASSOCIEE**

VERFAHREN ZUR BEHANDLUNG EINER HOCHLEISTUNGSELEKTRODENSCHICHT ZUR ERZEUGUNG VON POROSITÄT UND ENTSPRECHENDE MASCHINE

METHOD FOR TREATING A SUPER CAPACITY ELECTRODE FILM IN ORDER TO CREATE POROSITY AND ASSOCIATED MACHINE

(84) Etats contractants désignés:
**AT BE BG CH CY CZ DE DK EE ES FI FR GB GR HU IE IS IT LI LT LU MC NL PL PT RO SE SI SK TR**

(30) Priorité: **13.05.2004 FR 0405181**

(43) Date de publication de la demande:
**07.02.2007 Bulletin 2007/06**

(73) Titulaire: **Batscap**
**29500 Ergué-Gabéric (FR)**

(72) Inventeurs:
• **DREVET, Hélène**
**F-29000 Quimper (FR)**

• **REY, Isabelle**
**F-29000 Quimper (FR)**
• **LE GAL, Guy**
**F-29000 Quimper (FR)**
• **PEILLET, Michel**
**F-29500 Ergue Gaberic (FR)**

(74) Mandataire: **Texier, Christian et al**
**Cabinet Régimbeau**
**20, rue de Chazelles**
**75847 Paris Cedex 17 (FR)**

(56) Documents cités:
**US-A- 3 679 614     US-A- 4 648 417**
**US-A- 6 071 451     US-A1- 2003 157 314**

**Description**

L'invention concerne le domaine du traitement des films polymère destinés à la formation d'électrodes. Ces électrodes sont utilisées dans des dispositifs de stockage d'énergie électrique tels que condensateurs, supercondensateurs et générateurs ou batteries.

Les films destinés à la formation d'électrodes de dispositifs de stockage d'énergie à électrolyte liquide (comprenant du solvant et des sels) doivent présenter une haute surface spécifique et une bonne accessibilité de l'électrolyte aux charges actives contenues dans l'électrode. En effet, la qualité d'imprégnation de l'électrode par l'électrolyte conditionne les performances du dispositif de stockage d'énergie obtenu (en particulier sa résistance et sa capacité).

Les films d'électrode peuvent être obtenus par extrusion d'un mélange de polymères et de charges actives carbonées. Le mélange contient des polymères insolubles et un/ou plusieurs polymère(s) soluble(s) ou calcinable(s). Dans les techniques d'extrusion « sans solvant », le mélange subit une plastification et les charges actives sont enrobées par les polymères. A cet effet, le mélange est extrudé, puis on élimine le ou les polymère(s) soluble(s) ou calcinable(s) de façon à former des pores. Ce type de technique est par exemple décrit dans le document FR 2 759 087-A (publié le 7 août 1998).

Le problème posé par les techniques d'extrusion sans solvant est que la proportion de charges actives contenues dans le mélange est nécessairement limitée. En effet, le taux d'incorporation de charges actives dans un polymère plastifié est limité par la surface spécifique des charges actives. Plus le taux de charges actives contenues dans le mélange est élevé, plus les propriétés mécaniques du film obtenu ont tendance à se dégrader.

C'est pourquoi, la proportion de polymère formant les électrodes est gènéralement relativement élevéé, ce qui conduit à l'obtention d'électrodes présentant une résistance élevée et une capacité réduite.

Un but de l'invention est de proposer un procédé automatisé de traitement de film permettant d'obtenir des films d'électrode présentant une capacité massique et une conductivité améliorées.

A cet effet, l'invention propose un procédé de traitement d'un film d'électrode de supercondensateur, conforme à la revendication 1.

Le procède de l'invention vise à obtenir une élimination maximale du ou des polymère(s) soluble(s) lors du défilement en continu du film dans le bac de lavage.

La sous étape de lavage ne permet jamais d'éliminer la totalité du ou des polymère(s) contenu(s) dans le mélange initial. Seule une partie dite « partie extractible » du ou des polymère(s) soluble(s) présent(s) dans le mélange initial est éliminée. L'autre partie reste liée aux charges actives contenues dans le mélange.

La sous-étape de lavage conduit à une augmentation de la porosité du film et de la proportion de charges actives qu'il contient.

En outre le séchage en continu évite de provoquer des variations dimensionnelles brutales du film dues au retrait thermique généré par le chauffage et un changement de phase du mélange constitutif du film (le mélange passe d'un état gonflé partiellement dissout à un état solide).

L'invention concerne également une machine de traitement d'un film d'électrode de supercondensateur conforme à la revendication 40.

D'autres caractéristiques et avantages ressortiront encore de la description sur laquelle est purement illustrative et non limitative et doit être lue en regard des figures annexées parmi lesquelles :

- la figure 1 représente de manière schématique une machine de traitement d'un film d'électrode conforme à un premier mode de réalisation de l'invention.
- la figure 2 illustre de manière schématique les variations de largeur d'une bande de film au cours des étapes de lavage et de séchage du film,
- la figure 3 représente de manière schématique une machine de traitement d'un film d'électrode conforme à un deuxième mode de réalisation de l'invention,
- la figure 4 illustre de manière schématique une variante des moyens de lavage pouvant être mis en oeuvre,
- les figures 5 et 6 illustrent de manière schématique des modes de réalisation de rouleaux sur lesquels défile la laize de film à traiter,
- la figure 7 illustre de manière schématique en coupe transversale un rouleau permettant d'améliorer le défilement de la laize de film,
- la figure 8 représente de manière schématique un film d'électrode fragile maintenu en sandwich entre deux couches de support au cours de son traitement.

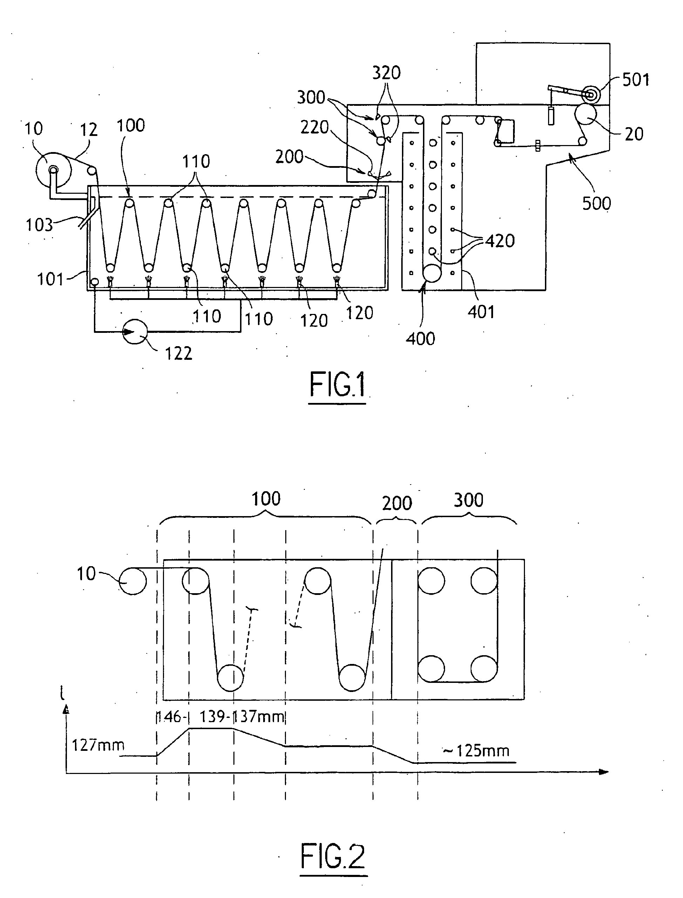

Sur la figure 1, la machine de traitement illustrée comprend de manière générale un poste de lavage 100, un poste de rinçage 200, un poste de pré-séchage 300, un poste de séchage 400 et un poste d'enroulement 500.

Un film d'électrode 12 présentant une épaisseur comprise entre 80 et 200 $\mu$m est déroulé à partir d'une bobine d'alimentation 10 et est entraîné en défilement et guidée par des rouleaux à travers les différents postes de traitement.

Le film 12 passe en premier lieu à travers le poste de lavage 100. L'étape de lavage permet d'éliminer le ou les polymère(s) soluble(s) qui composent le film. Le poste de lavage 100 comprend un bac de lavage 101 rempli de solvant. Le niveau du solvant est maintenu constant dans le bac 101 par un système de trop plein 103. Le film d'électrode 12 est guidé en défilement à travers le bac 101 par une série de rouleaux 110 disposés parallèlement les uns aux autres transversalement à la direction de défilement du film. Les rouleaux 110 sont des rouleaux lisses, semi-entraînés par des courroies. Comme on peut le voir sur la figure 1, les rouleaux 110 sont disposés alternativement à proximité du fond du bac 101 et à proximité de la surface du solvant. Le film 12 d'électrode s'étend alternativement sous les rouleaux situés à proximité du fond du bac et sur les rouleaux situés à proximité de la surface du solvant, de sorte que le film parcourt dans le bac une trajectoire en zigzag. Cette caractéristique permet d'obtenir une trajectoire de longueur maximale du film pour un volume de bac donné et par conséquent un temps de lavage maximal. Il s'agit en effet dans cette étape de lavage de favoriser au maximum la dissolution des polymères solubles.

Les rouleaux 110 sont aptes à engendrer une tension minimale du film 12. A cet effet, les rouleaux comportent par exemple des galets tournant fous sur des axes entraînés en rotation.

Le solvant contenu dans le bac 101 de lavage est constitué d'eau fournie par le réseau d'approvisionnement urbain ou d'eau déminéralisée (issue d'un traitement de l'eau du réseau urbain ou des eaux usées en boucle fermée). On a remarqué que la présence de composés ioniques et minéraux dans l'eau du réseau d'approvisionnement urbain pouvait être à l'origine, lorsque ces composés se retrouvent dans le film d'électrode après lavage, de réactions d'oxydoréduction ultérieures dans la supercapacité. C'est pourquoi, on préfère utiliser de l'eau déminéralisée qui permet de réduire ces réactions d'oxydoréduction et par conséquent évite un vieillissement prématuré de l'électrode obtenue lorsqu'elle est utilisée dans un supercondensateur. L'eau déminéralisée est par exemple issue d'un traitement des eaux usées en boucle fermées. Elle présente une conductivité inférieure à 10 $\mu$S/cm (microSiemens par centimètre).

L'eau du bac de lavage 101 est maintenue à une température constante contrôlée comprise entre 20° et 90° Celsius, de préférence entre 45° et 50°Celsius. Pour des raisons pratiques, la température peut être fixée par exemple à 47° Celsius, ce qui évite que des opérateurs devant intervenir manuellement sur le film ne se brûlent lorsqu'ils doivent plonger les mains dans le bac 101. L'eau contenue dans le bac est chauffée et maintenue à température par des moyens de chauffage par convexion tels que des plaques chauffantes.

L'eau contenue dans le bac 101 est renouvelée en continu de sorte que la concentration en polymère(s) dissou (t)(s) dans le bac 101 soit comprise entre 0 et 100 g/L (grammes par litre). A cet effet, le bac 101 est alimenté en continu par de l'eau propre tandis que le surplus d'eau est éliminé par le trop plein 103.

Les dimensions du bac 101 ainsi que la disposition des rouleaux de guidage 110 sont déterminés de sortes que la durée d'immersion totale du film dans le bac de lavage soit supérieure à 3 minutes, de préférence comprise entre environ 3 et 10 minutes. Typiquement, si le film défile à une vitesse d'environ 2,5 m/min (mètres par minute) et s'étend dans le bac sur une longueur de défilement de 8,5 m, il en résulte une durée d'immersion de 3,4 minutes.

Des buses 120 disposées en fond de bac à proximité des rouleaux 110 projettent sur le film des jets d'eau et assurent un brassage de l'eau autour du film par agitation mécanique. Les jets d'eau sont alimentés par une pompe 122 qui aspire l'eau depuis le fond du bac 101 et la réinjecte par les buses 120. Ce système de brassage par pompage et projection sur le film permet d'homogénéiser la température de l'eau dans le bac de lavage et favorise la dissolution des polymères solubles par la création d'un écoulement turbulent en surface du film.

Le film 12 défile ensuite à travers le poste de rinçage 200. L'étape de rinçage est destinée à éliminer les résidus entraînés par le film sur sa surface à la sortie du bac de lavage. Le poste de rinçage 200 comprend des buses 220 qui projettent un solvant de rinçage sur chaque face du film.

On remarque sur la figure 1 que le solvant projeté s'écoule le long du film dans le bac de lavage 101, ce qui permet d'alimenter celui-ci en solvant. Dans cette configuration, le solvant utilisé pour le rinçage est donc le même que le solvant contenu dans le bac de lavage, c'est à dire de l'eau fournie par le réseau d'approvisionnement urbain ou de l'eau déminéralisée issue d'un réseau de recyclage des eaux usées.

Le solvant de rinçage projeté sur le film au niveau du poste 200 de rinçage est maintenu à une température comprise entre 10° et 90° Celsius.

Le solvant de rinçage étant renouvelé avec un débit compris entre 1 et 5L par minute. Le débit du solvant de rinçage est par exemple d'environ 2 L/min (litres par minute).

Le film défile ensuite à travers les postes de pré-séchage 300 et de séchage 400. Le but des étapes de pré-séchage et de séchage est d'évacuer suffisamment l'eau contenue dans le film de sorte que celui puisse être bobiné en fin de traitement en évitant un collage des spires de la bobine. Une préoccupation lors des étapes de pré-séchage et de séchage est de fournir une évaporation progressive de l'eau afin d'éviter d'endommager le film.

Le poste de pré-séchage 200 comprend deux buses 320 disposées de part et d'autre du film et s'étendant dans une direction transversale à sa direction de défilement du film. Les buses 320 projettent sur chacune des faces du film une lame d'air comprimée. L'air projeté est sec et froid.

Le poste de séchage 400 comprend une enceinte 401 à travers laquelle défile le film. L'enceinte 401 comprend un ensemble de buses 420 soufflant un air chaud à une température comprise entre 50 et 120 degrés Celsius, de préférence 100 degrés Celsius, le film défile dans l'enceinte 401 durant environ une minute.

Le poste d'enroulement 500 du film ainsi séché comprend une bobine de film 20 entraînée en rotation sur laquelle vient s'enrouler le film traité. La bobine est formée par enroulement du film sur un mandrin. Le poste d'enroulement 500 comprend éventuellement un rouleau presseur 501 qui roule sur la surface de la bobine 20 et vient presser le film sur celle-ci. Ce rouleau presseur 501 est destiné à éviter toute formation de plis dans la bobine.

La figure 2 représente de manière schématique les variations de largeur d'une bande de film en correspondance avec les différentes étapes de traitement auxquelles le film est soumis au niveau des postes de lavage 100, pré-séchage 200 et séchage 300. Comme on peut le constater, la bande présente une largeur initiale d'environ 127 mm lors de son passage à travers le poste de lavage 100. La bande subit initialement un gonflement concomitant à la dissolution du ou des polymère(s) soluble(s) dans le solvant. La bande passe ainsi d'une largeur 127 mm à une largeur de 142 mm. Cette largeur diminue en cours de lavage pour atteindre 139 mm puis 137 mm. La largeur de la bande reste ensuite sensiblement constante durant la fin du lavage.

Lors du passage du film à travers le poste de pré-séchage 200, le film subit une rétraction qui le fait passer d'une largeur de 137 mm à environ 125 mm. Cette rétraction est due simultanément à un phénomène de retrait thermique du film et à un changement de phase des polymères qui le composent. Les polymères passent d'une phase partiellement solubilisée à une phase solide. L'étape de pré-séchage permet d'éliminer la majeure partie de l'eau contenue dans le film.

Comme on peut le constater sur la figure 2, l'étape de séchage finale dans le poste de séchage 300 n'entraîne pratiquement aucune variation de largeur de la bande. Cette étape est destinée à évacuer le restant d'eau contenu dans le film.

On a constaté que l'augmentation de la proportion de charges carbonées contenues dans le film qui résulte de l'élimination de polymère(s) soluble(s) se produit majoritairement dans le premier tiers du parcours du film dans le bac de lavage 101. En effet, on estime que l'élimination d'environ 90% en poids de la partie extractible du ou des polymère(s) soluble(s) contenu(s) dans le film se produit durant les 90 premières secondes de lavage.

Par conséquent, une solution pour optimiser l'étape de lavage consiste à faire passer le film progressivement dans plusieurs bacs de lavages, ces bacs de lavages présentant une concentration en polymères dissouts qui diminue à mesure du défilement du film.

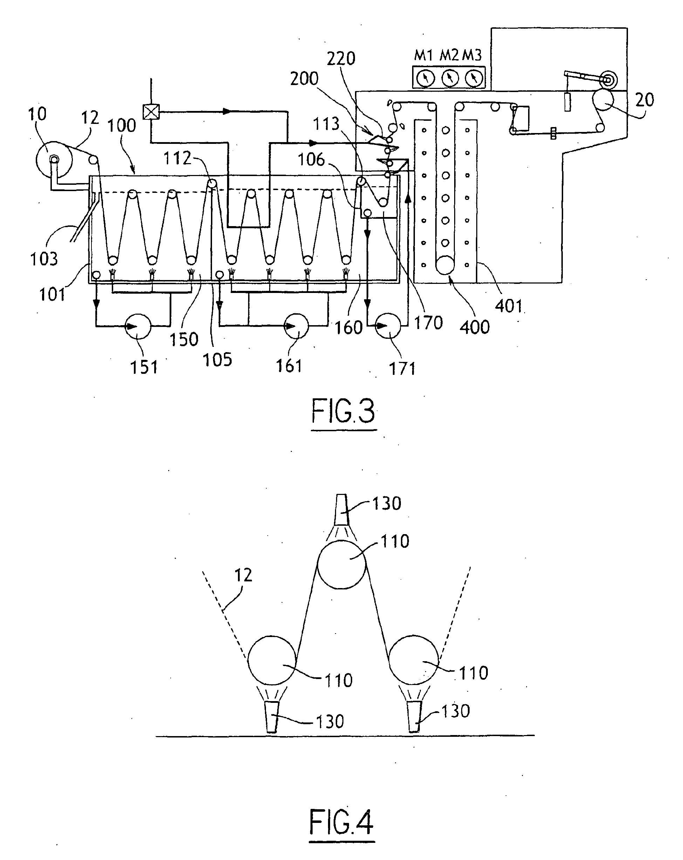

La figure 3 illustre un deuxième mode de réalisation de la machine de traitement dans lequel le bac de lavage 101 a été séparé en trois compartiments 150, 160, et 170 aux moyens de cloisons 105 et 106 disposées transversalement au bac 101. Des rouleaux 112 et 113 ont été surélevés de manière à faire défiler le film 12 au dessus des cloisons 105 et 106 pour le faire passer d'un compartiment à l'autre. Le film défile ainsi en premier lieu dans le premier compartiment de lavage 150 puis dans le deuxième compartiment de lavage 160 et enfin dans le troisième compartiment 170 qui constitue un bac de pré-rinçage.

Comme on peut le constater sur la figure 3, le niveau de solvant dans chacun des compartiments 150, 160 et 170 est réglé respectivement par le niveau du trop plein 103, la hauteur de la cloison 105 et la hauteur de la cloison 106. Ces niveaux sont déterminés de sortes que le solvant se déverse en cascade du bac de pré-rinçage 170 vers le deuxième bac de lavage 160 par dessus la cloison 105, puis vers le premier bac de lavage 150 par dessus la cloison 106. Autrement dit, les compartiments 150, 160 du bac de lavage 101 sont alimentés en solvant par débordement du solvant contenu respectivement dans les compartiments adjacents 160, 170 dans le sens inverse de défilement du film 12. Ainsi, la concentration en polymère(s) dissou(t)(s) dans le solvant décroît d'un compartiment à l'autre dans le sens de défilement du film 12. Le premier compartiment de lavage 150 est le compartiment dans lequel la concentration en polymères est la plus élevée. Le bac de pré-rinçage 170 est le compartiment dans lequel la concentration en polymères dissouts est la moins élevée. Dans le deuxième compartiment de lavage 160, la concentration est intermédiaire. Dans chaque compartiment 150, 160, 170 la concentration en polymère(s) dissout(s) dans le solvant qu'il contient est constante.

Le compartiment 150 dans lequel le film défile en premier est dimensionné de sorte que l'extraction d'au moins 90% en poids du ou des polymère(s) soluble(s) soit réalisée dans ledit compartiment 150.

De manière analogue au mode de mise en oeuvre de la figure 1, le bac de pré-rinçage 170 est alimenté par le solvant projeté par les buses de rinçage 220 du poste de rinçage 200. Le solvant s'écoule le long du film jusque dans le bac de pré-rincage 170. Le solvant de rinçage projeté par les buses de rinçage est de l'eau fournie par le réseau d'alimentation urbain ou de l'eau déminéralisée issue d'un réseau de recyclage des eaux usées. Le circuit d'eau alimentant les buses 220 passe à travers le deuxième bac de lavage 160 de manière à chauffer l'eau qu'il conduit par échange thermique avec le bac de lavage. Ainsi, l'eau projetée par les buses 220 est de l'eau chaude.

L'eau contenue dans le bac de pré-rinçage 170 est brassée par un système de pompe 171 qui aspire l'eau à partir du fond du compartiment et la réinjecte vers les buses de rinçage du poste de rinçage 200.

De même, l'eau contenue dans les compartiments 150 et 160 de lavage est brassée par des systèmes de pompes 151 et 161 indépendants similaires au système 122 de la figure 1. Le solvant aspiré de chaque compartiment 150, 160, 170 circule dans des circuits de brassage indépendants, ce qui permet de maintenir les compartiments à des concentrations différentes. Dans ce mode de mise en oeuvre, les débits de brassages de chacun des systèmes 151, 161 et 171 pourront être adaptés indépendamment les uns des autres.

D'autres mises en oeuvre de l'invention peuvent bien entendu être envisagées.

En particulier, on pourra utiliser pour l'extraction des polymères solubles, des solvants organiques par exemples de la famille des alcools (éthanols, méthanols) ou des solvant aqueux tels que de l'eau contenant des sels (par exemple $Na_2SO_4$), de l'eau contenant des produits tensioactifs favorisant la mouillabilité des polymères solubles.

En ce qui concerne les techniques de brassage utilisées, les systèmes de pompage et de projection peuvent être remplacés par des agitateurs mécaniques disposés au fond du ou des bacs de lavage ou de rinçage.

En ce qui concerne l'étape de lavage, l'extraction des polymère(s) soluble(s) peut-être réalisée non par immersion du film dans un solvant mais par projection de solvant sur le film, ainsi qu'illustré sur la figure 4. Sur cette figure, tandis que le film défile sur des rouleaux 110, des buses 130 positionnées à proximité des rouleaux projettent sur les deux faces du film un solvant sous pression. Avec une telle technique de lavage, le temps de parcours est à peu près équivalent à celui requis pour le lavage par immersion. Le nombre de buses de projection et la pression de solvant peuvent être adaptés (par exemple le débit de chaque buse peut être de l'ordre de 2 L/min).

Par ailleurs, dans les modes de réalisation représentés aux figures 1 et 3, les rouleaux de guidage 110 sont des rouleaux cylindriques lisses semi-entraînés. Dans le cas d'un lavage par projection de solvant sur le film, ce type de guidage peut s'avérer mal adapté. Ces rouleaux ne permettent pas d'évacuer convenablement l'eau qui se trouve emprisonnée entre les rouleaux et le film. En outre, ces rouleaux ne permettent pas de contrôler le trajet du film de manière satisfaisante. En particulier, la largeur du film peut varier en raison de déviations latérales que subit le film par rapport au plan vertical moyen de son trajet dans le poste de chauffage 400, ces déviations augmentant les risques de casse du film.

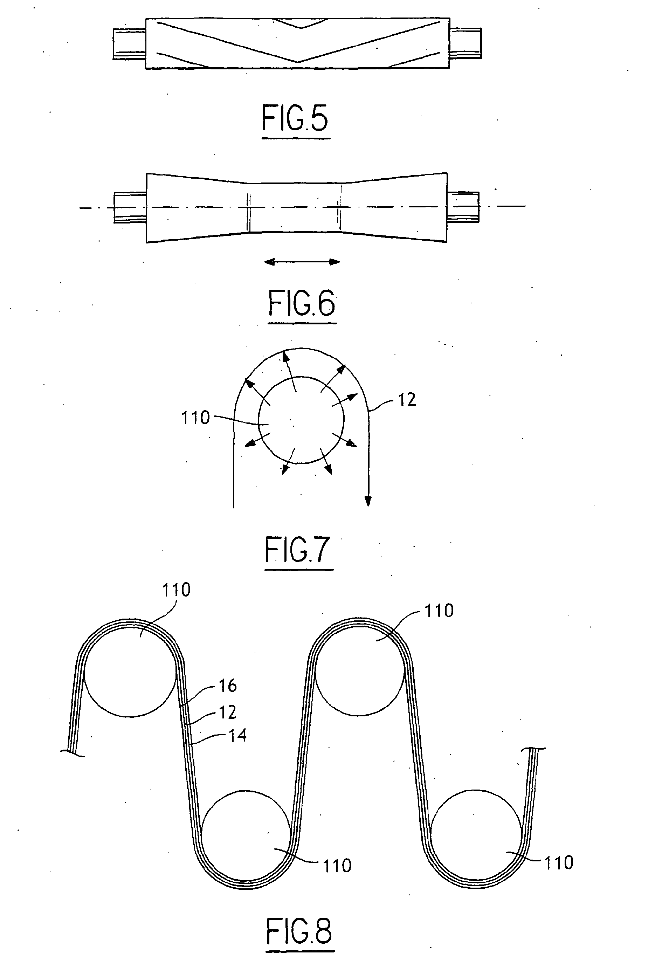

Pour remédier à ce problème, on prévoit d'utiliser des rouleaux présentant des rainures longitudinales d'évacuation de solvant ainsi que représenté sur la figure 5. Sur le rouleau représenté sur le figure 5, des rainures en forme générale de V s'étendant dans un direction générale longitudinale du rouleau guident le solvant vers les extrémités de celui-ci.

Par ailleurs, il est possible d'utiliser des rouleaux formés à partir d'une génératrice concave ou convexe. En particulier, les rouleaux de type concaves présentent une forme concave qui ramène en permanence le film dans un même plan de défilement comme illustrée sur la figure 6.

On comprendra que les rainures d'évacuation d'eau de la figure 5 peuvent être utilisées sur des rouleaux de type concaves comme celui qui est représenté dans la figure 6.

Il est possible également de jouer sur la nature du revêtement des rouleaux. En alternant des rouleaux de guidage présentant un revêtement métallique (par exemple en acier) et un revêtement en matériau élastomère (par exemple en caoutchouc), on peut maîtriser l'importance des retraits transversaux et longitudinaux du film.

On peut également jouer sur la texture du revêtement du rouleau. Par exemple, une texture à picots favorise l'évacuation de l'eau.

Il est possible également d'utiliser des rouleaux montés fous, c'est à dire libres en rotation autour de leur axe, qui ne présentent pratiquement aucune résistance mécanique ou des rouleaux à motorisation indépendante afin d'adapter la traction exercée sur le film selon les.déformations qu'il subit du fait de la dissolution.

Le film peut également défiler sur un parcours de rouleaux cylindriques fixes, ces rouleaux présentant des perforations au travers desquelles un liquide, par exemple du solvant est injecté. Comme illustré sur la figure 6, de l'eau est injectée suivant les flèches. Cette injection crée un coussin d'eau entre le rouleau et le film. Cette technique de guidage de type « aquaplaning » facilite l'entraînement du film et évite de générer des contraintes trop importantes dans le film. De plus, le fait d'injecter de l'eau sur le film favorise la dissolution des polymères solubles par action mécanique de surface.

En ce qui concerne l'étape de rinçage, celle-ci peut être réalisée non pas par projection de solvant sur le film comme illustré sur la figure 1, mais en faisant défiler le film dans un bac de rinçage contenant un solvant de rinçage propre, c'est à dire présentant une concentration en polymère(s) dissou(t)(s) sensiblement nulle. Dans ces conditions, le bac de lavage 101 est alors alimenté en solvant par débordement du solvant contenu dans le bac de rinçage vers le bac de lavage 101.

En ce qui concerne l'étape de séchage, celle-ci peut être réalisée par convexion, sous air chaud (comme illustré sur la figure 1). Dans une variante, cette étape de séchage peut être réalisée dans une enceinte sous vide où défile le film 12. Dans une autre variante, l'étape de séchage peut être réalisée par conduction, en faisant défiler le film 12 sur des rouleaux chauffants ou encore par rayonnement.

Le procédé qui vient d'être décrit est adapté non seulement au traitement de films d'électrode autosupportés, mais également au traitement de films d'électrode plus fragiles.

Par l'expression « autosupporté », on entend un film dont la composition est telle qu'il présente en lui-même une cohésion et une tenue mécanique en élongation suffisante pour qu'il conserve son intégrité durant le traitement sans être supporté.

Au contraire, certains films d'électrode plus fragiles ne présentent pas une cohésion et une tenue mécanique en élongation suffisante pour subir une traction sans être dégradés. Dans ce cas, le film traité peut être maintenu au cours de son défilement et des différentes étapes de lavage, rinçage et séchage par au moins une couche de support.

Dans le cas où le film est traité dans des machines de traitement telles que celles qui sont représentées sur les figures 1 et 2, le film sera de préférence maintenu en sandwich entre deux couches de support 14 et 16 ainsi qu'illustré sur la figure 8. Comme le film 12 parcourt une trajectoire en zigzag dans le bac de lavage, le film sera donc en contact avec les rouleaux 110 alternativement sur l'une et l'autre de ses faces. Ainsi, chacune des couches de support 14 et 16 protège l'une des surfaces du film 12 en contact avec les rouleaux 110.

Les couches de support 14 et 16 sont constituées d'un matériau ajouré permettant au film 12 d'être en contact avec le solvant lors des étapes de lavage et de rinçage et d'être séché. Les couches de support 14 et 16 sont par exemple formées d'une matière nontissée en polyesther hydrolié présentant une masse surfacique de 45 g/m$^2$ (fournie par la société THARREAU INDUSTRIES sous la référence AQUADIM 45 G NL).

CARACTERISTIQUES DES FILMS TRAITES

On considère trois films A, B et C autosupportés d'électrode de supercondensateur formés par extrusion d'un mélange de polymères et de charges actives.

Le film A présente une épaisseur e de 130$\mu$m et est formé d'un mélange comprenant un polymère de renfort mécanique (fluoropolymère), deux polymères hydrosolubles (polyéthers) et 34% en masse de charbon actif ayant une surface BET mesurée de 990 m$^2$/g.

Le film B présente une épaisseur e de 130$\mu$m et est formé d'un mélange comprenant un polymère de renfort mécanique (fluoropolymère), deux polymères hydrosolubles (polyéthers), du charbon actif et un additif conducteur (noir de carbone).

Le film C présente une épaisseur e de 130$\mu$m et est formé d'un mélange comprenant un polymère de renfort mécanique (fluoropolymère), deux polymères hydrosolubles (polyéthers) et 33,7% en masse de charbon actif ayant une surface spécifique BET mesurée de 1035 m$^2$/g.

Les films A, B et C sont traités par le procédé de traitement décrit précédemment.

On mesure la conductivité du film A dans la direction de l'épaisseur et film et dans la direction perpendiculaire à l'épaisseur du film (c'est à dire dans une direction parallèle à la surface du film), la perméabilité du film et la surface spécifique BET du film.

La mesure de conductivité dans la direction de l'épaisseur du film A est réalisée selon les étapes suivantes. On découpe à l'emporte pièce dans le film un échantillon sous la forme d'un disque présentant un diamètre D de 18 mm. Chacune des faces de l'échantillon est métallisée en utilisant une suspension d'argent. Puis un fil de cuivre est fixé sur chaque face métallisée afin de relier l'échantillon à un appareil de mesure. L'appareil de mesure impose un courant $I$ entre les deux faces métallisée et mesure la tension $U$ qui en résulte. La conductivité $\rho$ dans la direction de l'épaisseur du film est déterminée de la manière suivante :

$$\rho = R \times \frac{S}{e}$$

où $R$ est la résistance de l'échantillon dans la direction de l'épaisseur du film, $S$ est la surface de l'échantillon perpendiculaire à l'épaisseur du film et $e$ est l'épaisseur du film.
On a:

$$R = \frac{U}{I} \quad \text{et} \quad S = \pi \frac{D^2}{4}.$$

La mesure de conductivité dans la direction perpendiculaire à l'épaisseur du film A (c'est à dire dans une direction parallèle à la surface du film) est réalisée selon les étapes suivantes. On découpe dans le film un échantillon sous la forme d'une bande de dimensions $l$=1 cm x $L$ =10 cm. Un appareil de mesure à quatre pointes impose un courant $I$ entre les deux extrémités de la bande et mesure la tension $U$ qui en résulte. A cet effet, deux pointes sont disposées à chacune des extrémités de la bande pour imposer le courant et deux autres pointes sont également disposées à chacune des extrémités de la bande pour mesurer la tension. La conductivité $\rho$ dans la direction perpendiculaire à l'épaisseur du film est déterminée de la manière suivante :

$$\rho = R \times \frac{S}{L}$$

où $R$ est la résistance de l'échantillon dans la direction perpendiculaire à l'épaisseur du film $S$ est la surface de l'échantillon dans la direction de l'épaisseur du film et $L$ est la distance entre deux pointes (sensiblement égale à la longueur de la bande).
On a :

$$R = \frac{U}{I} \text{ et } S = e \times l.$$

La mesure de perméabilité du film A est réalisée par la méthode de Darcy, par injection d'un fluide (gaz ou solvant) dans le film poreux. La perméabilité au gaz est mesurée en utilisant du diazote et la perméabilité au solvant est mesurée en utilisant de l'acétonitrile. La perméabilité intrinsèque $K$ est déterminée de la manière suivante :

$$k = K \times \eta$$

où $k$ est une constante qui dépend du fluide utilisé et du matériau constituant le film, $\eta$ est la viscosité du fluide.
On a

$$\vec{V} = k \cdot \Delta \vec{P}$$

Où $\vec{V}$ est la vitesse du fluide dans l'échantillon et $\Delta \vec{P}$ est le gradient de pression sur l'échantillon.
On mesure la surface spécifique BET des films B et C.
La mesure de surface spécifique BET (mesurée par la méthode Brunauer, Emmett et Teller) sur des échantillon de films B et C est obtenu au moyen d'un porosimètre fourni par exemple par la société COULTER et référencé SA 3100.
On obtient les résultats de mesure regroupés dans les tableaux suivants :

| Film A | Avant traitement | Après traitement |
|---|---|---|
| Conductivité dans la direction de l'épaisseur (mS/cm) | 3,01 | 27,86 |
| Conductivité dans la direction perpendiculaire à l'épaisseur du film (S/cm) | 0,063 | 0,131 |
| Perméabilité au gaz (mesure de Darcy) | 0 | 0,172 |
| Perméabilité au solvant (mesure Darcy) | 0 | 0,00138 |

| Films B et C | Avant traitement | | Après traitement | |
|---|---|---|---|---|
| Film | B | C | B | C |
| Surface spécifique BET (m²/g) | 0,29 | 3,47 | 37,09 | 40,74 |

On constate que le procédé de traitement permet d'obtenir un film présentant une conductivité dans la direction de l'épaisseur du film, comprise entre 20 et 30 mS/cm (milliSiemens par centimètre), une conductivité dans une direction perpendiculaire à l'épaisseur du film, comprise entre 0,1 et 2 S/cm (Siemens par centimètre) et une surface spécifique BET comprise entre 30 et 45 m²/g.

**Revendications**

1. Procédé de traitement d'un film d'électrode (12) de supercondensateur, obtenu par extrusion d'un mélange de polymères et de charges actives sans solvant, le mélange comprenant au moins un polymère soluble dans un solvant aqueux ou organique, ledit procédé comprenant une étape d'élimination d'une partie extractible du ou des polymère(s) soluble(s) par immersion du film (12) dans le solvant aqueux ou organique dudit polymère, dans lequel l'étape d'élimination du ou de(s) polymère(s) soluble(s) comprenant les sous-étapes consistant à :

   - faire défiler en continu le film (12) dans au moins un bac de lavage (101) contenant le solvant, le solvant étant maintenu à une température contrôlée,
   - rincer le film,
   - sécher le film en continu, et
   - enrouler le film,

   **caractérisé en ce que** durant la sous-étape de rinçage, le film (12) est soumis à des projections de solvant, ledit solvant s'écoulant vers le bac de lavage (101).

2. Procédé selon la revendication 1, **caractérisé en ce que** le solvant est choisi parmi les composés suivants : l'eau, les solvants organiques, tels que les alcools, et des mélanges eau + sels ou eau + tensio-actifs.

3. Procédé selon la revendication 2, **caractérisé en ce que** le solvant est de l'alcool, notamment de l'éthanol ou du méthanol.

4. Procédé selon la revendication 2, **caractérisé en ce que** le solvant est de l'eau.

5. Procédé selon la revendication 4, **caractérisé en ce que** le solvant est de l'eau déminéralisée.

6. Procédé selon la revendication 4, **caractérisé en ce que** l'eau présente une conductivité inférieure à 10 $\mu$S/cm (microSiemens par centimètre).

7. Procédé selon l'une des revendications qui précèdent, **caractérisé en ce que** le bac de lavage (101) est séparé en plusieurs compartiments (150, 160, 170) dans lesquels le film (12) défile successivement.

8. Procédé selon la revendication 7, **caractérisé en ce qu'**un compartiment (150, 160) du bac de lavage (101) est alimenté en solvant par débordement du solvant contenu dans un compartiment adjacent (160,170) dans le sens inverse de défilement du film (12).

9. Procédé selon l'une des revendications 7 ou 8, **caractérisé en ce que** dans chaque compartiment (150, 160, 170) la concentration en polymère(s) dissou(t)(s) dans le solvant qu'il contient est constante.

10. Procédé selon l'une des revendications 7 à 9, **caractérisé en ce que** la concentration en polymère(s) dissou(t)(s) dans le solvant décroît d'un compartiment (150, 160, 170) à l'autre dans le sens de défilement du film (12).

11. Procédé selon l'une des revendications 6 à 9, **caractérisé en ce qu'**au cours de la sous-étape d'élimination du ou des polymère(s) soluble(s), l'élimination d'au moins de l'ordre de 90% en poids de la partie extractible du ou des polymère(s) soluble(s) est réalisée dans le compartiment (150) dans lequel le film (12) défile en premier.

12. Procédé selon l'une des revendications qui précèdent, **caractérisé en ce que** la sous-étape d'élimination de la partie extractible du ou des polymère(s) soluble(s) conduit à extraire au moins de l'ordre de 90% en poids du ou des polymère(s) soluble(s) durant les 90 premières secondes du défilement du film dans le bac de lavage (101).

13. Procédé selon l'une des revendications qui précèdent, **caractérisé en ce que** la température du solvant contenu dans le bac de lavage (101) est comprise entre 10 et 90 degrés Celsius, de préférence entre 45 et 50 degrés Celsius.

14. Procédé selon l'une des revendications qui précèdent, **caractérisé en ce que** le solvant contenu dans le bac de lavage (101) est chauffé par des moyens de convexion.

15. Procédé selon l'une des revendications qui précèdent, **caractérisé en ce que** la concentration en polymère(s) dissou(t)(s) dans le bac de lavage (101) est de l'ordre de 10 à 100 g/L.

**16.** Procédé selon l'une des revendications qui précèdent, **caractérisé en ce que** la durée de défilement du film (12) dans le bac de lavage (101) est de l'ordre de 3 à 10 minutes.

**17.** Procédé selon l'une des revendications qui précèdent, **caractérisé en ce que** le bac de lavage (101) est séparé en plusieurs compartiments (150, 160, 170) équipés chacun d'un circuit de brassage indépendant (151, 161, 171).

**18.** Procédé selon la revendication 17, **caractérisé en ce que** le solvant contenu dans au moins un des compartiments (150, 160, 170) du bac de lavage est brassé par des moyens de pompage et de projection du solvant sur le film (12).

**19.** Procédé selon la revendication 17, **caractérisé en ce que** le solvant contenu dans au moins un des compartiments (150, 160, 170) du bac de lavage (101) est brassé par des moyens d'agitation mécanique.

**20.** Procédé selon l'une des revendications qui précèdent, **caractérisé en ce que** le film (12) est entraîné en défilement dans le bac de lavage (101) sur des rouleaux, les rouleaux étant aptes à engendrer une tension minimale du film (12).

**21.** Procédé selon la revendication 20, **caractérisé en ce que** les rouleaux comportent des galets tournant fous sur des axes entraînés en rotation.

**22.** Procédé selon l'une des revendications qui précèdent, **caractérisé en ce que** durant la sous-étape de rinçage, le film (12) est rincé par le solvant, le solvant de étant chauffé.

**23.** Procédé selon l'une des revendications qui précèdent, **caractérisé en ce que** durant la sous-étape de rinçage, le film (12) est rincé par le solvant dont la température est comprise entre 10° et 90° Celsius.

**24.** Procédé selon l'une des revendications qui précèdent, **caractérisé en ce que** durant la sous-étape de rinçage, le film (12) est entraîné en défilement dans un bac de rinçage contenant du solvant présentant une concentration en polymère(s) dissout(s) sensiblement nulle.

**25.** Procédé selon l'une des revendications qui précèdent, **caractérisé en ce que** le bac de lavage (101) est alimenté en solvant par débordement du solvant contenu dans un bac de rinçage dans lequel le film est rincé, vers le bac de lavage (101).

**26.** Procédé selon l'une des revendications qui précèdent, **caractérisé en ce que** durant la sous-étape de rinçage, le film (12) est rincé par du solvant, le solvant étant renouvelé avec un débit compris entre 1 et 5L par minute.

**27.** Procédé selon l'une des revendications qui précèdent, **caractérisé en ce que** le film (12) est entraîné en défilement sur des rouleaux lisses, semi-entraînés par des courroies (110).

**28.** Procédé selon l'une des revendications qui précèdent, **caractérisé en ce que** le film (12) est entraîné en défilement sur un rouleau présentant des rainures longitudinales d'évacuation du solvant vers les extrémités du rouleau.

**29.** Procédé selon l'une des revendications qui précèdent, **caractérisé en ce que** le film (12) est entraîné en défilement sur un rouleau formé à partir d'une génératrice concave ou convexe.

**30.** Procédé selon l'une des revendications qui précèdent, **caractérisé en ce que** le film (12) est entraîné en défilement sur un rouleau dont la surface présente des picots.

**31.** Procédé selon l'une des revendications qui précèdent, **caractérisé en ce que** le film (12) est entraîné en défilement alternativement sur des rouleaux présentant un revêtement métallique, par exemple en acier, et des rouleaux présentant un revêtement en matériau élastomère, par exemple en caoutchouc.

**32.** Procédé selon l'une des revendications qui précèdent, **caractérisé en ce que** le film est entraîné en défilement sur des rouleaux équipés de motorisations indépendantes.

**33.** Procédé selon l'une des revendications qui précèdent, **caractérisé en ce que** le film (12) est entraîné en défilement sur un rouleau présentant des perforations au travers desquelles un liquide, par exemple du solvant est injecté, cette injection créant un coussin entre le rouleau et le film.

**34.** Procédé selon l'une des revendications qui précèdent, **caractérisé en ce que** la sous-étape de séchage est réalisée par convexion, en faisant défiler le film (12) dans une enceinte (401) sous air chaud à une température comprise entre 50 et 120 degrés Celsius, de préférence 100 degrés Celsius.

**35.** Procédé selon l'une des revendications 1 à 32, **caractérisé en ce que** la sous-étape de séchage est réalisée dans une enceinte sous vide où défile le film (12).

**36.** Procédé selon l'une des revendications 1 à 32, **caractérisé en ce que** la sous-étape de séchage est réalisée par conduction, en faisant défiler le film (12) sur des rouleaux chauffants.

**37.** Procédé selon l'une des revendications 1 à 32, **caractérisé en ce que** la sous-étape de séchage est réalisée par rayonnement.

**38.** Procédé selon l'une des revendications qui précèdent, **caractérisé en ce qu'**il comprend une sous-étape d'essuyage du film réalisée par projection d'air comprimé sec et froid.

**39.** Procédé selon l'une des revendications qui précèdent, **caractérisé en ce que** le film (12) est maintenu au cours du défilement par au moins une couche de support (14, 16).

**40.** Procédé selon la revendication 39, **caractérisé en ce que** le film (12) est maintenu en sandwich entre deux couches de support (14, 16).

**41.** Film (12) d'électrode de supercondensateur, formé par extrusion d'un mélange de polymères et de charges actives, **caractérisé en ce qu'**il est traité par le procédé selon l'une des revendications 1 à 40 et ce qu'il présente une épaisseur comprise entre 80 et 200 $\mu$m, une conductivité dans la direction de l'épaisseur du film, comprise entre 20 et 30 mS/cm (milliSiemens par centimètre), une conductivité dans une direction perpendiculaire à l'épaisseur du film, comprise entre 0,1 et 2 S/cm (Siemens par centimètre) et une surface spécifique BET comprise entre 30 et 45 m2/g.

**42.** Machine de traitement d'un film (12) d'électrode de supercapacité, obtenu par extrusion d'un mélange de polymères et de charges actives sans solvant, le mélange comprenant au moins un polymère soluble dans un solvant aqueux ou organique, ladite machine comprenant des moyens (100) pour éliminer une partie extractible du ou des polymère (s) soluble(s) par immersion du film (12) dans le solvant aqueux ou organique dudit polymère,
dans lequel les moyens (100) d'élimination du ou de(s) polymère(s) soluble(s) comprennent des moyens pour faire défiler en continu le film (12) dans au moins un bac de lavage (101) contenant le solvant, des moyens pour contrôler et maintenir la température du solvant, des moyens (200) pour rincer le film, des moyens (300, 400) pour sécher le film en continu, et des moyens (500) pour enrouler le film,
**caractérisée en ce que** les moyens (200) pour rincer le film comprennent des moyens pour projection de solvant sur le film (12), ledit solvant s'écoulant vers le bac de lavage (101).

**43.** Machine selon la revendication 49, **caractérisée en ce que** le bac de lavage (101) est séparé en plusieurs compartiments (150, 160, 170) dans lesquels le film (12) défile successivement.

**44.** Machine selon la revendication 43, **caractérisée en ce que** le compartiment (150) dans lequel le film (12) défile en premier est dimensionné de sorte que l'élimination d'au moins 90% en poids de la partie extractible du ou des polymère(s) soluble(s) est réalisée dans ledit compartiment (150).

**Claims**

**1.** A method for processing a supercapacitor electrode film (12), which is created by extrusion of a mixture of polymers and of active fillers without any solvent, the mixture comprising at least one polymer which is soluble in an aqueous or organic solvent, said method comprising a step of removing an extractable part of the soluble polymer(s) by immersion of the film (12) in the aqueous or organic solvent of said polymer, wherein the step of removing the soluble polymer(s) comprises substeps of:

- continuously running the film (12) in at least one washing tank (101) containing the solvent, with the solvent being held at a controlled temperature,
- rinsing the film,
- drying the film continuously, and
- winding up the film,

**characterized in that**, during the rinsing substep, the film (12) is subject to projections of solvent, said solvent flowing towards the washing tank (101).

2. The method according to claim 1, **characterized in that** the washing solvent is selected from among the following compounds: water, organic solvents such as alcohols, and mixtures of water + salts or water + surfactants.

3. The method according to claim 2, **characterized in that** the washing solvent is an alcohol, notably ethanol or methanol.

4. The method according to claim 2, **characterized in that** the solvent is water.

5. The method according to claim 4, **characterized in that** the solvent is demineralized water.

6. The method according to claim 4, **characterized in that** the water has a conductivity of less than 10 $\mu$S/cm (microSiemens per centimetre).

7. The method according to any of the preceding claims, **characterized in that** the washing tank (101) is separated into several compartments (150, 160, 170) in which the film (12) runs successively.

8. The method according to claim 7, **characterized in that** one compartment (150, 160) of the washing tank (101) is fed with solvent by overflow of the solvent contained in an adjacent compartment (160, 170) in the direction opposite to the running of the film (12).

9. The method according to any of claims 7 or 8,
**characterized in that** in each compartment (150, 160, 170) the concentration of dissolved polymer(s) in the solvent which it contains is constant.

10. The method according to any of claims 7 to 9,
**characterized in that** the concentration of dissolved polymer(s) in the solvent decreases from one compartment (150, 160, 170) to the next in the running direction of the film (12).

11. The method according to any of claims 6 to 9,
**characterized in that** during the substep of removing the soluble polymer(s), the removal of the order of at least 90% by weight of the extractable part of the soluble polymer(s) is achieved in the compartment (150) in which the film (12) runs first.

12. The method according to any of the preceding claims, **characterized in that** the substep of removing the extractable part of the soluble polymer(s) leads to the extraction of the order of at least 90% by weight of the soluble polymer(s) during the first 90 seconds of running of the film in the washing tank (101).

13. The method according to any of the preceding claims, **characterized in that** the temperature of the solvent contained in the washing tank (101) is between 10 and 90 degrees Celsius, and preferably between 45 and 50 degrees Celsius.

14. The method according to any of the preceding claims, **characterized in that** the solvent contained in the washing tank (101) is heated by convection means.

15. The method according to any of the preceding claims, **characterized in that** the concentration of dissolved polymers in the washing tank (101) is of the order of 10 to 100 g/l.

16. The method according to any of the preceding claims, **characterized in that** running time of the film (12) in the washing tank (101) is of the order of 3 to 10 minutes.

**17.** The method according to any of the preceding claims, **characterized in that** the washing tank (101) is separated into several compartments (150, 160, 170) each equipped with an independent mixing circuit (151, 161, 171).

**18.** The method according to claim 17, **characterized in that** the solvent contained in at least one of the compartments (150, 160, 170) of the washing tank is mixed by means for pumping and spraying the solvent onto the film (12).

**19.** The method according to claim 17, **characterized in that** the solvent contained in at least one of the compartments (150, 160, 170) of the washing tank (101) is mixed by mechanical stirring means.

**20.** The method according to any of the preceding claims, **characterized in that** the film (12) is driven so as to run in the washing tank (101) on rollers, these rollers being capable of generating a minimum tension of the film (12).

**21.** The method according to claim 20, **characterized in that** the rollers include idling rollers on axles driven into rotation.

**22.** The method according to any of the preceding claims, **characterized in that** during the rinsing substep, the film (12) is rinsed by the solvent, the solvent being heated.

**23.** The method according to any of the preceding claims, **characterized in that** during the rinsing substep, the film (12) is rinsed by the solvent, the temperature of which is comprised between 10 and 90° Celsius.

**24.** The method according to any of the preceding claims, **characterized in that** during the rinsing substep, the film (12) is driven so as to run in a washing tank (101) containing solvent having a substantially zero concentration of dissolved polymer(s).

**25.** The method according to any of the preceding claims, **characterized in that** the washing tank (101) is fed with solvent by overflow of the solvent contained in a rinsing tank in which the film is rinsed, into the washing tank (101).

**26.** The method according to any of the preceding claims, **characterized in that** during the rinsing substep, the film (12) is rinsed by solvent, the solvent being refreshed with a flow rate comprised between 1 and 5 1 per minute.

**27.** The method according to any of the preceding claims, **characterized in that** the film (12) is driven so as to run on smooth rollers, semi-driven by belts (110).

**28.** The method according to any of the preceding claims, **characterized in that** the film (12) is driven so as to run on a roller having longitudinal grooves for discharging the solvent towards the ends of the roller.

**29.** The method according to any of the preceding claims, **characterized in that** the film (12) is driven so as to run on a roller formed from a concave or convex generatrix.

**30.** The method according to any of the preceding claims, **characterized in that** the film (12) is driven so as to run on a roller, the surface of which is spiked.

**31.** The method according to any of the preceding claims, **characterized in that** the film (12) is driven so as to run alternately on rollers having a metal, for example steel, coating and on rollers having a coating in elastomeric material, for example rubber.

**32.** The method according to any of the preceding claims, **characterized in that** the film is driven so as to run on rollers equipped with independent motor drives.

**33.** The method according to any of the preceding claims, **characterized in that** the film (12) is driven so as to run on a roller having perforations through which a liquid, for example solvent, is injected, this injection generating a cushion between the roller and the film.

**34.** The method according to any of the preceding claims, **characterized in that** the drying substep is achieved by convection, by causing the film (12) to run in an enclosure (401) under hot air at a temperature comprised between 50 and 120 degrees Celsius, preferably 100 degrees Celsius.

**35.** The method according to any of claims 1 to 32,

**characterized in that** the drying substep is carried out in an enclosure *in vacuo* in which the film (12) runs.

36. The method according to any of claims 1 to 32,
    **characterized in that** the drying substep is achieved by conduction, by causing the film (12) to run on heating rollers.

37. The method according to any of claims 1 to 32,
    **characterized in that** the drying substep is achieved by radiation.

38. The method according to any of the preceding claims, **characterized in that** it comprises a substep of wiping the film, achieved by projecting dry and cold compressed air.

39. The method according to any of the preceding claims, **characterized in that** the film (12) is held during its running by at least one supporting layer (14, 16).

40. The method according to claim 39, **characterized in that** the film (12) is maintained sandwiched between two supporting layers (14, 16).

41. A supercapacitor electrode film (12), formed by extrusion of a mixture of polymers and active fillers,
    **characterized in that** it is processed by the method according to any of claims 1 to 40 and **in that** it has a thickness of between 80 and 200 $\mu$m, a conductivity in the direction of the thickness of the film of between 20 and 30 mS/cm (milliSiemens per centimetre), a conductivity in a direction perpendicular to the thickness of the film of between 0.1 and 2 S/cm (Siemens per centimetre) and a BET specific area of between 30 and 45 $m^2$/g.

42. A machine for processing a supercapacitor electrode film (12), obtained by extrusion of a mixture of polymers and active fillers without any solvent, the mixture comprising at least one polymer which is soluble in an aqueous or organic solvent, said machine comprising means (100) for removing an extractable part of the soluble polymer(s) by immersion of the film (12) in the aqueous or organic solvent of said polymer,
    wherein the means (100) for removing the soluble polymer(s) comprise means for continuously running the film (12) in at least one washing tank (101) containing the solvent, means for controlling and maintaining the temperature of the solvent, means (200) for rinsing the film, means (300, 400) for drying the film continuously, and means (500) for winding up the film
    **characterized in that** the means (200) rinsing the film comprise means for projecting solvent on the film (12), said solvent flowing towards the washing tank (101).

43. The machine according to claim 42, **characterized in that** the washing tank (101) is separated into several compartments (150, 160, 170) in which the film (12) runs successively.

44. The machine according to claim 43, **characterized in that** the compartment (150) in which the film (12) runs first is dimensioned so that the removal of at least 90% by weight of the extractable part of the soluble polymer(s) is achieved in said compartment (150).

**Patentansprüche**

1. Verfahren zur Behandlung einer Hochleistungs-Elektrodenschicht (12), die durch Extrusion eines Gemischs aus Polymeren und aktiven Chargen ohne Lösungsmittel hergestellt wird, wobei das Gemisch mindestens ein in einem wässrigen oder organischen Lösungsmittel lösliches Polymer umfasst, wobei das Verfahren einen Schritt des Entfernens eines extrahierbaren Teils des oder der löslichen Polymere durch Eintauchen der Schicht (12) in das wässrige oder organische Lösungsmittel des Polymers umfasst,
    wobei der Schritt des Entfernens des oder der löslichen Polymere die Unterschritte umfasst, die darin bestehen:

    - die Schicht (12) mindestens einen das Lösungsmittel enthaltenden Waschbehälter (101) kontinuierlich durchlaufen zu lassen, wobei das Lösungsmittel auf einer kontrollierten Temperatur gehalten wird,
    - die Schicht zu abspülen,
    - die Schicht kontinuierlich zu trocknen und
    - die Schicht aufzurollen,

    **dadurch gekennzeichnet, dass** die Schicht (12) während des Unterschritts des Abspülen Lösungsmittelspritzern ausgesetzt ist, wobei das Lösungsmittel in den Waschbehälter (101) abläuft.

2. Verfahren nach Anspruch 1, **dadurch gekennzeichnet, dass** das Lösungsmittel aus den folgenden Verbindungen Wasser, organische Lösungsmittel wie Alkohole und den Gemischen Wasser + Salze oder Wasser + Tenside ausgewählt ist.

3. Verfahren nach Anspruch 2, **dadurch gekennzeichnet, dass** das Lösungsmittel Alkohol ist, vor allem Ethanol oder Methanol.

4. Verfahren nach Anspruch 2, **dadurch gekennzeichnet, dass** das Lösungsmittel Wasser ist.

5. Verfahren nach Anspruch 4, **dadurch gekennzeichnet, dass** das Lösungsmittel demineralisiertes Wasser ist.

6. Verfahren nach Anspruch 4, **dadurch gekennzeichnet, dass** das Wasser eine Leitfähigkeit von unter 10 μS/cm (Mikrosiemens je Zentimeter) aufweist.

7. Verfahren nach einem der vorangehenden Ansprüche, **dadurch gekennzeichnet, dass** der Waschbehälter (101) in mehrere Abteile (150, 160, 170) unterteilt ist, die die Schicht (12) nacheinander durchläuft.

8. Verfahren nach Anspruch 7, **dadurch gekennzeichnet, dass** ein Abteil (150, 160) des Waschbehälters (101) mit Lösungsmittel durch Überlaufen des in einem benachbarten Abteil (160, 170) enthaltenen Lösungsmittels in umgekehrter Laufrichtung der Schicht (12) versorgt wird.

9. Verfahren nach einem der Ansprüche 7 oder 8, **dadurch gekennzeichnet, dass** in jedem Abteil (150, 160, 170) die Konzentration an in dem Lösungsmittel gelösten Polymer/en, das/die es enthält, konstant ist.

10. Verfahren nach einem der Ansprüche 7 bis 9, **dadurch gekennzeichnet, dass** die Konzentration an in dem Lösungsmittel gelösten Polymer/en von einem Abteil (150, 160, 170) zum anderen in Laufrichtung der Schicht (12) abnimmt.

11. Verfahren nach einem der Ansprüche 6 bis 9, **dadurch gekennzeichnet, dass** beim Unterschritt des Entfernens des oder der löslichen Polymere mindestens zirka 90 Gew.-% des extrahierbaren Teils des oder der löslichen Polymere in dem Abteil (150) entfernt werden, das die Schicht (12) zuerst durchläuft.

12. Verfahren nach einem der vorangehenden Ansprüche, **dadurch gekennzeichnet, dass** der Unterschritt des Entfernens des extrahierbaren Teils des oder der löslichen Polymere zur Extraktion von mindestens zirka 90 Gew.-% des oder der löslichen Polymere innerhalb der ersten 90 Sekunden des Durchlaufs der Schicht durch den Waschbehälter (101) führt.

13. Verfahren nach einem der vorangehenden Ansprüche, **dadurch gekennzeichnet, dass** die Temperatur des im Waschbehälter (101) enthaltenen Lösungsmittels zwischen 10 und 90 Grad Celsius inklusive beträgt, vorzugsweise zwischen 45 und 50 Grad Celsius.

14. Verfahren nach einem der vorangehenden Ansprüche, **dadurch gekennzeichnet, dass** das im Waschbehälter (101) enthaltene Lösungsmittel durch Konvektionsmittel erwärmt wird.

15. Verfahren nach einem der vorangehenden Ansprüche, **dadurch gekennzeichnet, dass** die Konzentration an im Waschbehälter (101) gelöstem/n Polymer/en zirka 10 bis 100 g/L beträgt.

16. Verfahren nach einem der vorangehenden Ansprüche, **dadurch gekennzeichnet, dass** die Durchlaufdauer der Schicht (12) durch den Waschbehälter (101) zirka 3 bis 10 Minuten beträgt.

17. Verfahren nach einem der vorangehenden Ansprüche, **dadurch gekennzeichnet, dass** der Waschbehälter (101) in mehrere Abteile (150, 160, 170) unterteilt ist, von denen jedes mit einem unabhängigen Mischkreis (151, 161, 171) ausgestattet ist.

18. Verfahren nach Anspruch 17, **dadurch gekennzeichnet, dass** das in mindestens einem der Abteile (150, 160, 170) des Waschbehälters enthaltene Lösungsmittel durch Mittel zum Pumpen und zur Projektion des Lösungsmittels auf die Schicht (12) gemischt wird.

**19.** Verfahren nach Anspruch 17, **dadurch gekennzeichnet, dass** das in mindestens einem der Abteile (150, 160, 170) des Waschbehälters (101) enthaltene Lösungsmittel durch mechanische Mischmittel gemischt wird.

**20.** Verfahren nach einem der vorangehenden Ansprüche, **dadurch gekennzeichnet, dass** die Schicht (12) auf Rollen durch den Waschbehälter (101) laufend bewegt wird, wobei die Rollen imstande sind, die Schicht (12) einer minimalen Spannung auszusetzen.

**21.** Verfahren nach Anspruch 20, **dadurch gekennzeichnet, dass** die Rollen Walzen umfassen, die frei auf den rotierend angetriebenen Achsen drehen.

**22.** Verfahren nach einem der vorangehenden Ansprüche, **dadurch gekennzeichnet, dass** die Schicht (12) beim Unterschritt des Abspülens von einem Spülmittel abgespült wird, wobei das Spülmittel erwärmt ist.

**23.** Verfahren nach einem der vorangehenden Ansprüche, **dadurch gekennzeichnet, dass** die Schicht (12) beim Unterschritt des Abspülens von dem Lösungsmittel abgespült wird, dessen Temperatur zwischen 10° und 90° Celsius inklusive ist.

**24.** Verfahren nach einem der vorangehenden Ansprüche, **dadurch gekennzeichnet, dass** die Schicht (12) beim Unterschritt des Abspülens einen Spülbehälter durchläuft, der Lösungsmittel enthält, das einen Konzentration an gelöstem/n Polymer/en von etwa null aufweist.

**25.** Verfahren nach einem der vorangehenden Ansprüche, **dadurch gekennzeichnet, dass** der Waschbehälter (101) durch Überlaufen des in einem Spülbehälter, in dem die Schicht abgespült wird, enthaltenen Lösungsmittels in den Waschbehälter (101) mit Lösungsmittel versorgt wird.

**26.** Verfahren nach einem der vorangehenden Ansprüche, **dadurch gekennzeichnet, dass** die Schicht (12) beim Unterschritt des Abspülens von Lösungsmittel abgespült wird, wobei das Lösungsmittel mit einer Kapazität zwischen 1 und 5L inklusive pro Minute erneuert wird.

**27.** Verfahren nach einem der vorangehenden Ansprüche, **dadurch gekennzeichnet, dass** die Schicht (12) auf glatten Rollen durchlaufend angetrieben wird, die teilweise von Riemen (110) angetrieben werden.

**28.** Verfahren nach einem der vorangehenden Ansprüche, **dadurch gekennzeichnet, dass** die Schicht (12) über eine Rolle laufend angetrieben wird, die Längsrillen zum Ableiten von Lösungsmittel in Richtung der Rollenenden aufweist.

**29.** Verfahren nach einem der vorangehenden Ansprüche, **dadurch gekennzeichnet, dass** die Schicht (12) über eine Rolle laufend angetrieben wird, die ausgehend von einer konkaven oder konvexen Mantellinie geformt ist.

**30.** Verfahren nach einem der vorangehenden Ansprüche, **dadurch gekennzeichnet, dass** die Schicht (12) über eine Rolle laufend angetrieben wird, deren Oberfläche Spitzen aufweist.

**31.** Verfahren nach einem der vorangehenden Ansprüche, **dadurch gekennzeichnet, dass** die Schicht (12) alternativ über Rollen laufend angetrieben wird, die einen metallischen Überzug aufweisen, zum Beispiel aus Stahl, und über Rollen, die einen Überzug aus Elastomermaterial aufweisen, zum Beispiel aus Gummi.

**32.** Verfahren nach einem der vorangehenden Ansprüche, **dadurch gekennzeichnet, dass** die Schicht über Rollen laufend angetrieben wird, die unabhängig motorisiert sind.

**33.** Verfahren nach einem der vorangehenden Ansprüche, **dadurch gekennzeichnet, dass** die Schicht (12) über eine Rolle laufend angetrieben wird, die Perforationen aufweist, durch die eine Flüssigkeit, zum Beispiel Lösungsmittel, eingespritzt wird, wobei durch dieses Einspritzen ein Polster zwischen der Rolle und der Schicht entsteht.

**34.** Verfahren nach einem der vorangehenden Ansprüche, **dadurch gekennzeichnet, dass** der Unterschritt des Trocknens durch Konvektion durchgeführt wird, indem die Schicht (12) einen Behälter (401) mit warmer Luft mit einer Temperatur zwischen 50 und 120 Grad Celsius inklusive durchläuft, vorzugsweise 100 Grad Celsius.

**35.** Verfahren nach einem der Ansprüche 1 bis 32, **dadurch gekennzeichnet, dass** der Unterschritt des Trocknens in einem Behälter unter Vakuum durchgeführt wird, den die Schicht (12) durchläuft.

**36.** Verfahren nach einem der Ansprüche 1 bis 32, **dadurch gekennzeichnet, dass** der Unterschritt des Trocknens durch Wärmeleitung durchgeführt wird, indem die Schicht (12) über Heizrollen geleitet wird.

**37.** Verfahren nach einem der Ansprüche 1 bis 32, **dadurch gekennzeichnet, dass** der Unterschritt des Trocknens durch Bestrahlen durchgeführt wird.

**38.** Verfahren nach einem der vorangehenden Ansprüche, **dadurch gekennzeichnet, dass** es den Unterschritt des Trocknens der Schicht umfasst, der durch Projektion trockener und kalter Druckluft durchgeführt wird.

**39.** Verfahren nach einem der vorangehenden Ansprüche, **dadurch gekennzeichnet, dass** die Schicht (12) während des Durchlaufs von mindestens einer Halteschicht (14, 16) gehalten wird.

**40.** Verfahren nach Anspruch 39, **dadurch gekennzeichnet, dass** die Schicht (12) zwischen zwei Halteschichten (14, 16) sandwichartig gehalten wird.

**41.** Hochleistungs-Elektrodenschicht (12), gebildet durch Extrusion eines Gemischs aus Polymeren und aktiven Chargen, **dadurch gekennzeichnet, dass** sie gemäß dem Verfahren nach einem der Ansprüche 1 bis 40 behandelt wird und dass sie eine Dicke zwischen 80 und 200 μm inklusive, eine Leitfähigkeit in der Richtung der Dicke der Schicht zwischen 20 und 30 mS/cm (Millisiemens je Zentimeter) inklusive, eine Leitfähigkeit in einer Richtung senkrecht zur Dicke der Schicht zwischen 0,1 und 2 S/cm (Siemens je Zentimeter) inklusive und eine spezifische BET-Oberfläche zwischen 30 und 45 m$^2$/g inklusive aufweist

**42.** Maschine zur Behandlung einer Hochleistungs-Elektrodenschicht (12), die durch Extrusion eines Gemischs von Polymeren und aktiven Chargen ohne Lösungsmittel hergestellt wird, wobei das Gemisch mindestens ein in einem wässrigen oder organischen Lösungsmittel lösliches Polymer umfasst, wobei die Maschine Mittel (100) umfasst, um einen extrahierbaren Teil des oder der löslichen Polymere durch Eintauchen der Schicht (12) in das wässrige oder organische Lösungsmittel des Polymers zu entfernen,
wobei die Mittel (100) zum Entfernen des oder der löslichen Polymere Mittel umfassen, um die Schicht (12) mindestens einen das Lösungsmittel enthaltenen Waschbehälter (101) kontinuierlich durchlaufen zu lassen, Mittel, um die Temperatur des Lösungsmittels zu kontrollieren und zu halten, Mittel (200), um die Schicht abzuspülen, Mittel (300, 400), um die Schicht kontinuierlich zu trocknen und Mittel (500), um die Schicht aufzurollen,
**dadurch gekennzeichnet, dass** die Mittel (200) zum Abspülen der Schicht Mittel zur Projektion von Lösungsmittel auf die Schicht (12) umfassen, wobei das Lösungsmittel in den Waschbehälter (101) abläuft.

**43.** Maschine nach Anspruch 49, **dadurch gekennzeichnet, dass** der Waschbehälter (101) in mehrere Abteile (150, 160, 170) unterteilt ist, die die Schicht (12) nacheinander durchläuft.

**44.** Maschine nach Anspruch 43, **dadurch gekennzeichnet, dass** das Abteil (150), das die Schicht (12) zuerst durchläuft, derart bemessen ist, dass mindestens 90 Gew.-% des extrahierbaren Teils des oder der löslichen Polymere in diesem Abteil (150) entfernt werden.

FIG.1

FIG.2

FIG.3

FIG.4

FIG.5

FIG.6

FIG.7

FIG.8

**EP 1 749 048 B1**

## RÉFÉRENCES CITÉES DANS LA DESCRIPTION

**Documents brevets cités dans la description**

- FR 2759087 A